(19) Europäisches Patentamt
European Patent Office
Office européen des brevets

(11) Veröffentlichungsnummer: **0 065 751**
**B1**

# (12) EUROPÄISCHE PATENTSCHRIFT

(45) Veröffentlichungstag der Patentschrift: **15.01.86**

(51) Int. Cl.⁴: **C 08 G 8/32**, B 01 F 17/52, C 09 B 67/38, D 06 P 1/56

(21) Anmeldenummer: **82104382.5**

(22) Anmeldetag: **19.05.82**

## (54) Anionische Verbindungen auf Basis modifizierter Novolak-Oxalkylate, ihre Herstellung und ihre Verwendung als schaumfreie grenzflächenaktive Mittel.

(30) Priorität: **23.05.81 DE 3120697**

(43) Veröffentlichungstag der Anmeldung: **01.12.82 Patentblatt 82/48**

(45) Bekanntmachung des Hinweises auf die Patenterteilung: **15.01.86 Patentblatt 86/3**

(84) Benannte Vertragsstaaten: **CH DE FR GB IT LI**

(56) Entgegenhaltungen:
**EP-A-0 058 384**
**AT-B-312 937**
**US-A-2 132 404**
**US-A-2 930 778**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Uhrig, Heinz, Feldbergstrasse 59, D-6374 Steinbach (DE)**
Erfinder: **Weide, Joachim, Im Stückes 63, D-6233 Kelkheim (Taunus) (DE)**
Erfinder: **Deubel, Reinhold, Dr., Geierfeld 64, D-6232 Bad Soden am Taunus (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft Verbindungen der allgemeinen Formel I

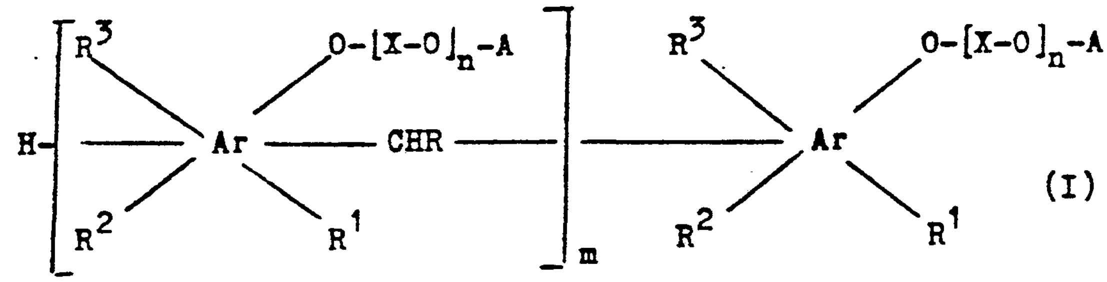

(I)

in welcher
Ar Benzol oder Naphthalin,
X die Gruppen $-CH_2-CH_2-$ und/oder $-CH_2-CH(CH_3)-$,
ein Teil der Reste A Benzoyl und/oder Naphthoyl und die übrigen Reste A
-CO-CH = CH-COOM und/oder
$-CO-CH_2-CH(SO_3M)-COOM$, wobei M für ein Kation steht, $R^1$, $R^2$ und $R^3$ Wasserstoff oder Alkyl mit 1 bis 14 C-Atomen,
R Wasserstoff und/oder Alkyl mit 1 bis 9 C-Atomen,
n eine Zahl von 1 bis 150 und
m eine Zahl von 2 bis 12
bedeuten.

Aus der DE-A-2132403 und der DE-A-2132404 sind ähnliche Alkyl-phenol-novolak-oxalkylatester bekannt, die aber durchweg mit Sulfobernsteinsäure verestert sind.

In der EP-A-58384 (Art. 54 (3) EPÜ-Dokument) sind bereits Alkylnaphthol-novolak- oxalkylat-ester und mischester vorgeschlagen worden, bei denen als Säurekomponenten Maleinsäure, Sulfobersteinsäure und Phthalsäure vorkommen.

Die Verbindung des genennten Standes der Technik sind schaumarme, anionische grenzflächenaktive Mittel und eignen sich als Dispergiermittel bei der Herstellung von Farbmitteldispersionen und als Netz-, Emulgier-, Egalisier- und Färbereihilfsmittel.

Die erfindungsgemäßen Verbindungen stellen weiter verbesserte Tenside in dem gleichen Anwendungsbereich dar.

In einer besonders bevorzugten Ausführungsform der Erfindung stehen $R^1$ für Wasserstoff, $R^2$ und $R^3$ für Wasserstoff oder Alkyl mit 1 bis 12, zweckmäßigerweise 1 bis 9 C-Atomen, R für Wasserstoff und/oder Alkyl mit 1 bis 4 C-Atomen, zweckmäßigerweise für Wasserstoff, n für eine Zahl von 2 bis 20, zweckmäßigerweise 8 bis 20, m für eine Zahl von 4 bis 10, zweckmäßigerweise 4 bis 8, M für Wasserstoff, ein Alkalimetall, zweckmäßigerweise Natrium, ein Äquivalent Erdalkalimetall und/oder eine Ammoniumgruppe, die durch niederes Alkyl und/oder niederes Hydroxyalkyl substituiert sein kann, sowie für eine aus Ammoniak oder niederen Alkylaminen durch Anlagerung von bis zu 150, zweckmäßigerweise von 5 bis 30 Ethylenoxid-und/oder Propylenoxideinheiten erhaltene Ammoniumgruppe.

Die Erfindung betrifft weiterhin Verfahren zur Herstellung der erfindungsgemäßen Verbindungen, die dadurch gekennzeichnet sind, daß man Novolak-Oxalkylate der Formel I, in welchen A Wasserstoff ist und Ar, X, $R^1$, $R^2$, $R^3$, R, n sowie m die vorstehend genannte Bedeutung haben, mit 1 bis m Mol einer den Benzoyl- und/oder Naphthoylrest einführenden O-acylierenden Verbindung sowie mit 1 bis m Mol Maleinsäureanhydrid und gegebenenfalls 1 bis m Mol Sulfit bzw. Hydrogensulfit oder 0,5 bis 0,5 m Mol Disulfit behandelt und gegebenenfalls freie Säuregruppen mit einer den Rest M einführenden Base neutralisiert.

Weiterhin betrifft die Erfindung die Verwendung dieser Verbindungen als grenzflächenaktive Mittel, insbesondere als Dispergier- und Verteilungsmittel für die Herstellung fließfähiger Pigmentdispersionen sowie für die Feinverteilung und Stabilisierung von Farbstoffen, ferner als Netz-, Emulgier- und Egalisiermittel, sowie als Färberei- und Kupplungshilfsmittel.

Die Ausgangsmaterialien werden erhalten, indem man Alkylphenole oder Alkylnaphthole bzw. deren Gemische im Molverhältnis 3:2 bis 17:16 mit Alkanalen in Gegenwart von sauren Katalysatoren zu Novolakharzen kondensiert. Diese Novolake sind mehr oder weniger spröde, klare, in großen Blöcken gelbbraun gefärbte Harze. Sie bestehen aus Gemischen von mehrkernigen, durch Alkylmethylenbrücken verknüpften Alkylphenol- bzw. Alkylnaphtholkernen. Die Zusammensetzung ist abhängig vor allem vom Verhältnis Alkylphenol bzw. Alkylnaphthol zum Aldehyd. An diese Harze wird Alkylenoxid in Mengen von 1 bis 150 Mol, bezogen auf jede

Hydroxylgruppe, vorzugsweise in Gegenwart alkalischer Katalysatoren, unter Bildung von Novolakharz-Oxalkylaten angelagert.

Als Ausgangsverbindungen zur Bildung von Novolakharzen eignen sich Alkylphenole, wie beispielsweise Kresole, Xylenole, Octyl-, Nonyl-, Dodecyl-, Tetradecyl-, Dibutyl-, Dioctyl-, Dinonyl-, Ditetradecylphenol oder deren Mischungen sowie Alkylnaphthole, wie beispielsweise Octyl-, Nonyl-, Dodecyl-, Dibutyl-, Dioctyl-, Dinonyl-, Ditetradecylnaphthol oder deren Mischungen. Als Beispiel für die bei der Kondensation einsetzbaren Alkanale sind zu erwähnen Acetaldehyd, Propionaldehyd oder Butyraldehyd, vorzugsweise Formaldehyd oder Aldehyde abgebende Verbindungen wie Paraformaldehyd, Trioxan, Tetraoxymethylen oder Paraldehyd. Als Katalysatoren können Mineralsäuren wie Schwefelsäure, Phosphorsäure sowie Sulfonsäuren, wie Dodecylbenzolsulfonsäure oder bevorzugt Salzsäure - wegen ihrer leichten Entfernbarkeit bei der Wasserentfernungmit einer Konzentration von 0,1 bis 5 Gewichtsprozent verwendet werden. Die Kondensation wird bei Temperaturen von 20 bis 150° C, bevorzugt 80 bis 130° C, unter Stickstoff durchgeführt. Das nach der Kondensation vorhandene Wasser muß abdestilliert werden, zuletzt unter vermindertem Druck (< 66 mbar), bis der Wassergehalt im Harz weniger als 0,3 % beträgt.

Die Oxalkylierung der Novolakharze erfolgt nach bekannten Methoden, vorzugsweise mit Alkalihydroxiden oder -alkoxiden als Katalysator bei 100 bis 200° C, bevorzugt bei 140 bis 180° C. Die Menge Ethylenoxid und/oder propylenoxid wird so bemessen, daß eine stabile Emulgierbarkeit bzw. eine völlige Löslichkeit der Anlagerungsprodukte in Wasser erreicht wird. Bevorzugt werden an jede Hydroxygruppe der Novolakharze je 1 bis 150, vorzugsweise 2 bis 20, insbesondere 8 bis 20,Mol Ethylenoxid und/oder Propylenoxid angelagert. Die Menge des angelagerten Alkylenoxids bemißt sich auch nach dem beabsichtigten Einsatzzweck und damit dem angestrebten Grad der Hydrophilie. Als Alkalihydroxid eignen sich Kaliumhydroxid oder bevorzugt Natriumhydroxid, als Alkalialkoxid Natriummethylat oder -ethylat; die Konzentration soll bevorzugt 0,05 bis 1,0 Gew.-%, bezogen auf Novolakharz, bei Beginn der Oxalkylierung,sein. Die Oxalkylierung kann drucklos oder in Druckgefäßen mit Propylenoxid oder bevorzugt Ethylenoxid oder Mischungen von beiden durchgeführt werden, wobei das Alkylenoxid gasförmig oder flüssig zugeführt werden kann. Der Arbeitsdruck beträgt 1 bis 10 bar, vorzugsweise 2 bis 4 bar.

Die Veresterung der Oxalkylat-Hydroxyendgruppen erfolgt in zwei Reaktionsstufen. In der ersten Reaktionsstufe wird ein Teil der Hydroxyendgruppen, jedoch mindestens eine Hydroxyendgruppe, mit einer den Benzoylrest oder den Naphthoylrest einführenden Verbindung, wie Benzoesäure, α- oder β-Naphthoesäure, Benzoesäureanhydrid, Benzoylchlorid, Naphthoylchlorid, Benzoesäuremethylester oder Naphthoesäuremethylester, verestert.

Bei Verwendung von Benzoesäure oder Naphthoesäure erfolgt die Veresterung bei 130 bis 220° C, vorzugsweise 150 bis 180° C, bei Verwendung von Benzoesäureanhydrid schon bei 20 bis 100° C, vorzugsweise bei 40 bis 80° C und anschließend zur Umsetzung der dabei entstehenden Benzoesäure ebenfalls bei 130 bis 220° C bzw. bevorzugt bei 150 bis 180° C. Als Katalysatoren können z.B. Benzolsulfonsäure, p-Toluolsulfonsäure, Borsäure, Zinnpulver, Zinkchlorid oder Schwefelsäure verwendet werden. Das sich dabei bildende Reaktionswasser wird gegebenenfalls unter Zusatz eines Schleppmittels wie eines Kohlenwasserstoffes oder Chlorkohlenwasserstoffes durch Abdestillieren entfernt. Veresterungen mit Benzoyl- bzw. Naphthoylchlorid werden bei 30 bis 100° C, vorzugsweise 45 bis 55° C, in einem inerten Lösemittel in Gegenwart von Alkalimetallhydroxiden oder -carbonaten durchgeführt. Die Teilveresterung der Hydroxyendgruppen kann aber auch durch Umesterung mit beispielsweise Benzoesäuremethylester in Gegenwart von 0,1 bis 1,0 Mol Natriummethylat bei 150 bis 200° C, vorzugsweise bei 160 bis 190° C, bei gleichzeitigem Abdestillieren des Methanols erfolgen.

In der zweiten Reaktionsstufe werden die restlichen Oxalkylat-Hydroxyendgruppen mit Maleinsäureanhydrid vollständig zu den Maleinsäurehalbestern durch Mischen und Verrühren bei 20 bis 100° C, bevorzugt 40 bis 80° C, in Anwesenheit von Alkalihydroxiden, deren Konzentration 0,1 bis 1,0 Gew.-%, bezogen auf die Gesamtmischung, betragen soll, umgesetzt. Da Maleinsäureanhydrid zur Sublimation neigt, ist es vorteilhaft, in Druckgefäßen unter einem Überdruck von 0,2 bis 1,0 bar Stickstoff oder Luft zu arbeiten und für kräftiges Durchmichen zu sorgen, da zu Beginn der Reaktion das geschmolzene Maleinsäureanhydrid mit den teilveresterten Oxalkylaten schlecht mischbar ist.

Die Überführung der Maleinsäurehalbester in die entsprechenden Sulfobernsteinsäurehalbester erfolgt nach Zugabe von wäßrigen Sulfit- oder Hydrogensulfitlösungen. Dabei kann die Menge der Sulfitlösungen so bemessen sein, daß alle Maleinsäurehalbestergruppen oder nur ein Teil hiervon umgesetzt werden. Auf jede umzusetzende Maleinsäurehalbestergruppe werden 1,0 bis 1,5, bevorzugt 1,05 bis 1,1 Äquivalente Alkali- oder Erdalkalisulfit, -hydrogensulfit bzw. -disulfit eingesetzt. Während hierbei durch die Zugabe wäßriger Lösungen von Sulfiten die neutralen Salze der Sulfobernsteinsäurehalbester entstehen, erhält man durch Zugabe wäßriger Lösungen von Hydrogensulfiten die sauren Halbestersalze, die vorzugsweise mit Alkyl- bzw. Alkylolaminen oder daraus hergestellten Oxalkylierungsaddukten neutralisiert werden. Die zugesetzte Wassermenge kann 50 bis 85 Gew.-%, bezogen auf die gesamte Lösung bzw. Mischung, betragen und ist von der Löslichkeit der Maleinsäure- bzw. der Sulfobernsteinsäurehalbester und der Viskosität der Lösung abhängig. Die Reaktionstemperaturen betragen 20 bis 100° C, bevorzugt 40 bis 80° C. Als Vertreter der niedermolekularen Alkylamine oder Alkylolamine seien genannt: Ethylamin, n-Propylamin, iso-Propylamin, n-Butylamin, iso-Butylamin, Monoethanolamin, Mono-n-propanolamin, Mono-isopropanolamin Mono-n-butanolamin, Mono-iso-butanolamin, Di-ethanolamin, Di-n-propanolamin, Di-n-butanolamin, Triethanolamin, Tripropanolamin oder Tributanolamin sowie gegebenenfalls daraus hergestellte Oxalkylierungsprodukte, wobei an 1 Mol der genannten Amine 1 bis 100 Mol, vorzugsweise 5

bis 30 Mol Ethylenoxid und/oder Propylenoxid angelagert sind, ferner Di- und Polyamine wie Ethylendiamin, Diethylentriamin, Triethylentetramin, Propylendiamin, Dipropylentriamin oder Tripropylentetramin.

Bei den erfindungsgemäßen Verbindungen und deren Gemischen handelt es sich um oberflächenaktive Substanzen mit äußerst vielseitigen Eigenschaften. Sie sind in Wässer klar löslich und nach der Jodfarbskala (DIN 6162) nahezu bis völlig farblos. Sie senken die Oberflächenspannung nach der Ringabreißmethode (DIN 53 914) und sind nach dem Ross-Miles-Test (DIN 53 902) völlig schaumfrei. Vor allem die Derivate mittlerer Alkylphenole zeichnen sich durch Hitzebeständigkeit aus. Außerdem netzen sie Baumwollgewebe nach der Tauchnetzmethode (DIN 53 901) und sind gegen Alkali sowie starke Säuren unter üblichen Anwendungsbedingungen der Tenside beständig.

Die erfindungsgemäßen Verbindungen eignen sich hervorragend als Dispergiermittel für die Herstellung schaumarmer Dispersionen von Pigmenten, Farbstoffen, optischen Aufhellern sowie für die Formulierung von Pflanzenschutz- und Schädlingsbekämpfungsmitteln, ferner als Emulgier-, Egalisier- und Färbereihilfsmittel zum Färben von natürlichen und synthetischen Fasermaterialien wie Baumwolle, Wolle, Cellulose, Zellwolle, Celluloseacetat und -triacetat, Polyester, Polyamid und Polyacrilnitril oder von Fasermaterialien, die diese Stoffe enthalten.

Die Verbindungen können dabei allein, als Gemisch oder in Kombination mit anderen tensidischen Verbindungen, Gerüststoffen und anderen Zusatz- und Hilfsstoffen in Emulgier- und Dispergiermittelformulierungen zur Anwendung kommen.

Die erfindungsgemäßen Dispergiermittel sind in jedem Verhältnis mit Wasser verdünnbar und eignen sich dadurch besonders gut zur Herstellung von hochkonzentrierten, fließfähigen Dispersionen organischer und anorganischer Pigmente. Die Herstellung solcher Pigmentdispersionen erfolgt in bekannter Weise, indem man die Pigmente, z.B. Azopigmente, verlackte Azopigmente, Triphenylmethanpigmente, Thioindigopigmente, Perylentetracarbonsäurepigmente, Dioxazinpigmente, Chinacridonpigmente, Phthalocyaminpigmente oder anorganische Pigmente mit den erfindungsgemäßen Verbindungen unter Zusatz von Ethylenglykol, Wasser und gegebenenfalls geringen Mengen anderer Dispergiermittel in einer geeigneten Dispergiervorrichtung, zum Beispiel einer Rührwerksmühle oder einem Doppelmuldenkneter, dispergiert. Das Verhältnis von Verteilungsmitteln zu Pigmentpulver kann in weiten Grenzen variieren und beträgt im allgemeinen 0,1 bis 0,2 Gewichtsteile Verteilungsmittel auf ein Teil trockenes Pigmentpulver. Die so erhaltenen Pigmertdispersionen eignen sich zum Einfärben von Dispersionsfarben für Innen- und Außenanstriche, für den Einsatz im textilen Pigmentdruck oder für den Einsatz in wäßrigen Flexo- bzw. Tiefdruckfarben. Die hervorragenden Netz- und Dispergiereigenschaften der beschriebenen Dispergiermittel kommen bei den niedrigen Einsatzmengen, bezogen auf die Pigmentgehalte in den Dispersionen, zum Tragen. Helle und brillante Farbtöne werden beim Flexo- und Tiefdruck durch die geringe Eigenfärbung der beanspruchten Dispergiermittel nicht beeinträchtigt.

Die nachfolgenden Beispiele dienen zur näheren Erläuterung der Erfindung (Teile (Tl.) und Prozentangaben beziehen sich auf das Gewicht.)

**Beispiele:**

**1. Herstellung der Novolak**

1.1. 5-Kern-nonylphenol-novolak

1100 Tl. Nonylphenol, 126,3 Tl. Paraformaldehyd (95 %ig) und 12,3 Tl. konz. Salzsäure wurden bei Raumtemperatur gemischt und unter Stickstoffatmosphäre 14 Stunden lang unter Rückfluß gerührt. Danach wurde die Innentemperatur bis auf 135° C gesteigert und innerhalb 4 Stunden das Reaktionswasser abdestilliert. Anschließend wurde bei einem Druck von etwa 20 bis 30 mbar 2 Stunden bei 135 bis 140° C nachgerührt. Ausbeute etwa 1139 Tl. Novolak.

1.2. 5-Kern-nonyl-β-naphthol-novolak

1331 Tl. Nonyl-β-naphthol wurden vorgelegt und bei Raumtemperatur unter langsamer Rührung 132 Tl. Paraformaldehyd eingetragen. Unter Überlagerung von Stickstoff wurde eine Stunde bei 50° C gerührt und nach Erhöhung der Innentemperatur auf 90° C wurden 15,1 Tl. konz. Salzsäure zugetropft. Danach wurde 10 Stunden bei 110° C bei gleichzeitigem Durchleiten von Stickstoff gerührt und nach Steigerung der Innentemperatur auf 135 bis 140° C wurde innerhalb 4 Stunden das Reaktionswasser entfernt. Dann wurde der Druck auf etwa 20 bis 30 mbar reduziert und 2 Stunden bei 135 bis 140° C nachgerührt. Nach dem Erkalten erhielt man ein dunkles rotbraunes festes Harz. Ausbeute etwa 1350 Tl. Novolakharz.

1.3. 7-Kern-p-kresol-novolak

728 Tl. p-Kresol wurden mit 189,5 Tl. Paraformaldehyd und 4,3 Tl. konz. Salzsäure wie in Beispiel 1.1 beschrieben 15 Stunden unter Rückfluß gerührt und danach aufgearbeitet. Ausbeute etwa 750 Tl. Novolakharz.

1.4. 7-Kern-octylphenol-novolak

1428 Tl. Octylphenol, 189,5 Tl. Paraformaldehyd und 10, 1 Tl. 4-Dodecylbenzolsulfonsäure wurden wie in Beispiel 1.1. beschrieben 14 Stunden am Rückfluß gerührt und danach aufgearbeitet. Ausbeute etwa 1500 Tl. Novolakharz.

1.5. 7-Kern-nonylphenol-novolak

1540 Tl. Nonylphenol, 189,5 Tl. Paraformaldehyd und 10, 9 Tl. 4-Dodecylbenzolsulfosäure wurden wie in

Beispiel 1.1. beschrieben 15 Stunden am Rückfluß gerührt und danach aufgearbeitet. Ausbeute 1606 Tl. hellgelbes sprödes Harz.

1.6. Techn. 7-Kern-nonylphenol-novolak

1831 Tl. Nonylphenol mit etwa 20 % Dinonylanteil, 189,5 Tl. Paraformaldehyd und 10,9 Tl. 4-Dodecylbenzolsulfonsäure wurden wie in Beispiel 1.1 beschriben 14 Stunden am Rückfluß gerührt und danach aufgearbeitet. Ausbeute etwa 1900 Tl. Novolakharz.

1.7. 9-Kern-nonylphenol-novolak

1980 Tl. Nonylphenol, 252,7 Tl. Paraformaldehyd, 13,9 Tl. 4-Dodecylbenzolsulfonsäure wurden wie in Beispiel 1.1. beschrieben 15 Stunden am Rückfluß gerührt und danach aufgearbeitet. Ausbeute: 2077 Tl. Harz.

**2. Herstellung der Novolak-Oxalkylate**

2.1. 5-Kern-nonylphenol-novolak-oxethylat

200 Tl. 5-Kern-Novolak 1.1.wurden nach Zugabe von 1, 1 Tl. frisch pulverisiertem Ätznatron in einem Druckgefäß unter Rühren und Zuführen von 596,7 Tl. Ethylenoxid bei 150 bis 160°C unter Aufrechterhaltung eines Druckes von etwa 3 bis 5 bar oxethyliert. Nachdem das ganze Ethvlenoxid aufgedrückt war, wurde 1 Stunde bei 150 bis 160°C nachgerührt. Das erhaltene Harz-Oxethylat entsprach einem 5-Kern-nonylphenol-novolak mit 75 Mol Ethylenoxid.

2.2. 5-Kern-nonyl-β-naphthol-novolak-oxethylat

200 Tl. 5-Kern-novolak 1.2. wurden nach Zugabe von 1, 1 Tl. frisch pulverisiertem Ätznatron in einem Druckgefäß unter Rühren und Zuführung von 59,5 Tl. Ethylenoxid bei 160 bis 170°C unter Aufrechterhaltung eines Druckes von 3 bis 5 bar oxethyliert. Nachdem das gesamte Ethylenoxid aufgedrückt war, wurde 1 Stunde bei 160 bis 170°C nachgerührt. Das erhaltene zähflüssige Oxethylat enthielt 90 Mol Ethylenoxid.

2.3. 7-Kern-p-kresol-novolak-oxethylat

200 Tl. 7-Kern-p-kresol-novolak 1.3. wurden nach Zugabe von 1,0 Tl. pulverisiertem Ätznatron mit 531 Tl. Ethylenoxid wie in Beispiel 2.1. beschrieben umgesetzt. Das erhaltene Harz-Oxethylat entsprach einem 7-Kern-p-kresol-novolak-oxethylat mit 49 Mol Ethylenoxid.

2.4. 7-Kern-octylphenol-novolak-oxethylat

200 Tl. 7-Kern-octylphenol-novolak 1.4.wurden nach Zugabe von 1,2 Tl. frisch pulverisiertem Ätznatron mit 544 Tl. Ethylenoxid wie in Beispiel 2.1. beschrieben, umgesetzt. Das erhaltene Harz-Oxethylat entsprach einem 7-Kern-octylphenol-novolak-oxethylat mit 100 Mol Ethylenoxid.

2.5. 7-Kern-nonylphencl-novolak-oxethylat

200 Tl. 7:Kern-novolak 1.5.wurden nach Zugabe von 1,2 Tl. Natriumhydroxid mit 568,9 Tl. Ethylenoxid wie in Beispiel 2.1 beschrieben, umgesetzt. Das erhaltene Harz-Oxethylat entsprach einem 7-Kern-nonylphenol-novolak mit 105 Mol

2.6. Techn. 7-Kern-nonylphenol-novolak-oxethylat

200 Tl. techn. 7-Kern-nonylphenol-novolak 1.6. wurden. nach Zugabe von 1,2 Tl. frisch pulverisiertem Ätznatron mit 573,8 Tl. Ethylenoxid wie in Beispiel 2.1. beschrieben techn. 7-Kern-nonylphenol-novolak mit 125 Mol Ethylenoxid.

2.7 Techn. 7-Kern-nonylphenol-novolak-oxethylat/oxpropylat

200 Tl. techn. 7-Kern-nonylphenol-novolak 1.6. wurden nach Zugabe von 4,5 Tl. Natriummethylat in einem Druckgefäß unter Rühren und Zuführen von 292,6 Tl. Propylenoxid und 444,4 Tl. Ethylenoxid bei 145 bis 170°C unter Aufrechterhaltung eines Druckes von etwa 4,4 bis 6,0 bar oxalkyliert. Nachdem das ganze Alkylenoxid aufgedrückt war, wurde 1 Stunde bei 150 bis 160°C nachgerührt. Das erhaltene Harz-Oxalkylat entsprach einem techn. 7-Kern-nonylphenol-novolak-oxalkylat mit 48,3 Mol Propylenoxid und 96,7 Mol Ethylenoxid.

2.8. 9-Kern-nonylphenol-novolak-oxethylat

200 Tl. 9-Kern-nonylphenol-novolak 1.7.wurden nach zusatz von 1,0 Tl. Natriumhydroxid mit 567,8 Tl. Ethylenoxid wie in Beispiel 2.1. beschrieben oxethyliert. Das erhaltene Harz-Oxethylat entsprach einem 9-Kern-nonylphenol-novolak mit 135 Mol Ethylenoxid.

**3. Herstellung der Novolak-oxalkylat-mischester-sulfosuccinate**

3.1. 5-Kern-nonylphenol-novolak-oxethylat-mischester-sulfosuccinat

300 Tl. Oxethylat 2.1. und 15,2 Tl. Benzoesäureanhydrid wurden bei Raumtemperatur gut gemischt und 3,5 Stunden bei 70 bis 80°C unter Überlagerung von Stickstoff gerührt. Nach Zugabe von 0,06 Tl. p-Toluolsulfonsäure und 100 Volumenteilen Xylol wurde innerhalb von 8 Stunden bei 150 bis 160°C das Reaktionswasser durch Auskreisen (azeotrope Destillation und Rückführung des Xylols) entfernt. Nach Abdestillieren des Schleppmittels und Erreichen einer Säurezahl (DIN 53 402) von unter 5 wurden 20,6 Tl. Maleinsäureanhydrid zugesetzt und weitere 3,5 Stunden bei 70 bis 80°C unter Stickstoffüberlagerung verestert. Anschließend ließ man eine Lösung aus 26,5 Tl. Natriumsulfit und 523 Tl. Wasser zulaufen und rührte 60 bis 120 Minuten bei 70 bis 80°C bis der

Ansatz klar wasserlöslich geworden war. Die Menge des zugesetzten Wassers kann zwischen 50 und 85 % der Endlösung betragen.

3.2. 5-Kern-nonyl-β-naphthol-novolak-oxethylat-mischester-sulfosuccinat

500 Tl. 5-Kern-nonyl-β-naphthol-novolak-oxethylat 2.2. wurden analog Verbindung 3.1. mit 21,3 Tl. Benzoesäureanhydrid verestert und mit 29,2 Tl. Maleinsäureanhydrid und einer Lösung aus 37,5 Tl. Natriumsulfit in 882 Tl. Wasser zum Sulfosuccinat umgesetzt. Die Menge des zugesetzten Wassers kann zwischen 50 und 85 % der Endlösung betragen.

3.3. 7-Kern-p-kresol-novolak-oxethylat-mischyster-sulfo-succinat

148,4 Tl. 7-Kern-p-kresol-novolak-oxethylat 2.3. wurden wie in Beispiel 3.1. beschrieben mit 17,0 Tl. Benzoesäureanhydrid verestert und anschließend mit 20,6 Tl. Maleinsäureanhydrid und einer Lösung aus 26,5 Tl. Natriumsulfit in 318,7 Tl. Wasser umgesetzt. Die Menge des zugesetzten Wassers kann zwischen 50 und 85 % betragen.

3.4. 7-Kern-octylphenol-novolak-oxethylat-mischester-sulfosuccinat

300,9 Tl. 7-Kern-octylphenol-novolak-oxethylat 2.4. wurden wie in Beispiel 3.1.beschrieben mit 18,3 Tl. Benzoesäure bei 150 bis 160°C verestert und anschließend mit 20,6 Tl. Maleinsäureanhydrid und einer Lösung aus 26,5 Tl. Natriumsulfit in 549,3 Tl. Wasser umgesetzt. Die Menge des zugesetzten Wassers kann zwischen 50 und 85 % betragen.

3.5. 7-Kern-nonylphenol-novolak-oxethylat-mischester-sulfosuccinate

3.5.1.

312 Tl. Oxethylat 2.5. wurden nach Zugabe von 17 Tl. Benzoesäureanhydrid wie in Beispiel 3.1. beschrieben bis zu einer Säurezahl von 15 verestert, bevor durch Zugabe von 20,6 Tl. Maleinsäureanhydrid nach weiteren 3,5 Stunden und einer Lösung aus 26,5 Tl. Natriumsulfit und 575,4 Tl. Wasser die Umsetzung zum Sulfosuccinat erfolgte. Die Menge des zugesetzten Wassers kann zwischen 50 und 85 % der Endlösung liegen.

3.5.2.

312 Tl. 7-Kern-novolak-oxethylat 2.5.wurden mit 26,5 Tl. Benzoesäuremethylester in Gegenwart von 1,5 Tl. Natriumethylat bei 200° C 24 Stunden am Rückfluß gerührt. Nach dem Abdestillieren des Methanols (Säurezahl 2) erfolgte analog Beispiel 3.5.1. durch Zugabe von 15,4 Tl. Maleinsäureanhydrid und einer Lösung von 19,8 Tl. Natriumsulfit in 571 Tl. Wasser die Umsetzung zum Sulfosuccinat. Die Menge des zugesetzten Wassers kann zwischen 50 und 85 % der Endlösung liegen.

3.5.3.

312 Tl. 7-Kern-nonylphenol-novolak-oxethylat 2.5. wurden in 450 Tl. Aceton gelöst und unter wirksamem Rühren in Gegenwart von 32 Tl. pulverisiertem Kaliumcarbonat bei Raumtemperatur allmählich mit 21 Tl. Benzoylchlorid versetzt. Danach wurde langsam auf 45 bis 55° C erwärmt und bei gleicher Temperatur 4 Stunden am Rückfluß gerührt. Nach Abtrennen der Salzewurde das Aceton im Vakuum abdestilliert, der Rückstand in Ether aufgenommen und mit Wasser gewaschen. Anschließend wurde die Etherphase getrocknet und der Ether durch Destillation entfernt. 259 Tl. des so hergestellten Benzoesäureesters wurden wie in Beisiel 3.1. beschrieben mit 19,4 Tl. Maleinsäureanhydrid und einer Lösung aus 25,0 Tl. Natriumsulfit und 509 Tl. Wasser umgesetzt. Die Menge des zugesetzten Wassers kann zwischen 50 und 85 % betragen.

3.5.4.

312 Tl. 7-Kern-nonylphenol-novolak-oxethylat 2.5. wurden wie in Beispiel 3.1. beschrieben mit 11,2 Tl. Benzoesäureanhydrid bis zu einer Säurezahl von 21 verestert und anschließend mit 25,75 Tl. Maleinsäureanhydrid und einer Lösung aus 33,1 Tl. Natriumsulfit in 551 Tl. Wasser umgesetzt. Die Menge des zugesetzten Wassers kann zwischen 50 und 85 % betragen.

3.5.5.

312 Tl. 7-Kern-nonylphenol-novolak-oxethylat 2.5. wurden wie in Beispiel 3.5.1. beschrieben mit 17 Tl. Benzoesäureanhydrid und 20,6 Tl. Maleinsäureanhydrid verestert und mit einer Lösung aus 21,9 Tl. Natriumhydrogensulfit und 563 Tl. Wasser bei 70 bis 80° C umgesetzt und 60 bis 120 Minuten gerührt, bis der Ansatz klar wasserlöslich geworden war. Anschließend wurde das noch saure Sulfobernsteinsäurehalbester-Salz mit 236 Tl. eines Alkylolamin-Oxethylates aus Monoethanolamin mit 20 Mol Ethylenoxid neutralisiert. Die Menge des zugesetzten Wassers kann zwischen 50 und 85 % betragen.

3.5.6.

312 Tl. 7-Kern-nonylphenol-novolak-oxethylat 2.5. wurden wie in Beispiel 3.5.1. beschrieben mit 17 Teilen Benzoesäureanhydrid und 20,6 Tl. Maleinsäureanhydrid verestert und mit einer Lösung aus 21,9 Tl. Natriumhydrogensulfit und 563 Tl. Wasser bei 70 bis 80° C umgesetzt und 60 bis 120 Minuten gerührt, bis der Ansatz klar wasserlöslich geworden war. Anschließend wurde das noch saure Sulfobernsteinsäurehalbester-Salz mit 192 Tl. eines Alkylolamin-Oxethylates aus Diethanolamin mit 15 Mol Ethylenoxid neutralisiert. Die Menge des zugesetzten Wassers kann zwischen 50 und 85 % betragen.

3.5.7.

312 Tl. 7-Kern-nonylphenol-novolak-oxethylat 2.5. wurden wie in Beispiel 3.5.1. beschrieben mit 17 Tl. Benzoesäureanhydrid und 20,6 Tl. Maleinsäureanhydrid verestert und mit einer Lösung aus 21,9 Tl. Natriumhydrogensulfit und 563 Tl. Wasser bei 70 bis 80° C umgesetzt und 60 bis 120 Minuten gerührt,bis der Ansatz klar wasserlöslich geworden war. Anschließend wurde das noch saure Sulfobernsteinsäurehalbester-Salz mit 177,9 Tl. eines Alkylolamin-Oxethylates aus Triethanolamin mit 15 Mol Ethylenoxid neutralisiert. Die Menge des zugesetzten Wassers kann zwischen 50 und 85 % betragen.

3.5.8.

312 Tl. 7-Kern-nonylphenol-novolak-oxethylat 2.5. wurden mit 17,2 Tl. 1-Naphthoesäure in Gegenwart von 1,5 Tl. p-Toluolsulfonsäure unter gleichzeitigem Auskreisen des Reaktionswassers mit 100 Volumenteilen Xylol 8 Stunden bei 160 bis 165° C unter Stickstoffatmosphäre bis zu einer Säurezahl von 5 verestert. Nach Entfernung des Schleppmittels wurden wie in Beispiel 3.5.1. beschrieben 27,5 Tl. Maleinsäureanhydrid und eine Lösung aus 33,1 Tl. Natriumsulfit in 585 Tl. Wasser zugegeben und 60 bis 120 Minuten gerührt, bis der Ansatz klar wasser-. löslich geworden war. Die Menge des zugesetzten Wassers kann zwischen 50 und 85 % der Endlösung betragen.

3.6. Techn. 7-Kern-nonylphenol-novolak-oxethylat-mischester-sulfosuccinat

370,6 Tl. techn. 7-Kern-nonylphenol-novolak-oxethylat 2.6 wurden wie in Beispiel 3.1. beschrieben mit 16,8 Tl. Benzoesäureanhydrid verestert und anschließend mit 19,6 Tl. Maleinsäureanhydrid und einer Lösung aus 25,2 Tl. Natriumsulfit in 648 Tl. Wasser umgesetzt. Die Menge des zugesetzten Wassers kann zwischen 50 und 85 % betragén.

3.7. Techn. 7-Kern-nonylphenol-novolak-oxethylat / oxpropylat-mischester-sulfosuccinat

448,6 Tl. techn. 7-Kern-nonylphenol-novolak-oxalkylat 2.7. wurden wie in Beispiel 3.1. beschrieben mit 17 Tl. Benzoesäureanhydrid verestert und anschließend mit 20,6 Tl. Maleinsäureanhydrid und einer Lösung aus 26,5 Tl. Natriumsulfit in 769 Tl. Wasser umgesetzt. Die Menge des zugesetzten Wassers kann zwischen 50 und 85 % betragen.

3.8. 9-Kern-nonylphenol-novolak-oxethylat-mischester-sulfosuccinat

500 Tl. 9-Kern-nonylphenol-novolak-oxethylat 2.8. wurden nach 5 Zugabe von 27,7 Tl. Benzoesäureanhydrid wie in Beispiel 3.1. beschrieben bis zu einer Säurezahl von 6 verestert und anschließend mit 31,5 Tl. Maleinsäureanhydrid sowie einer Lösung aus 40,5 Tl. Natriumsulfit in 400 Tl. Wasser zum entsprechenden Sulfosuccinat umgesetzt. Die Menge des zugesetzten Wassers kann zwischen 50 und 85 % der Endlösung liegen.

**4. Anwendungsbeispiele**

Die Anwendung der erfindungsgemäßen Substanzen als Dispergiermittel für gut fließfähige Pigmentdispersionen wird in den folgenden Beispielen weiter erläutert, ohne auf diese beschränkt zu sein.

4.1.

4.1.1.

520 Tl. Pigment Red 12 (Colour Index Number 12370) wurden mit 171 Tl. einer 42%igen wäßrigen Lösung des Tensids nach Herstellungsbeispiel 3.1.,35 Tl. Ethylenglykol und 40 Tl. Wasser in einem Doppelmuldenkneter etwa eine Stunde zäh geknetet. Nach erfolgter Feinverteilung wurde durch Zugabe von weiteren 125 Tl. Ethylenglykol und 109 Tl. wasser verdünnt. Die gut fließfähige 52%ige Pigmentpräparation eignet sich hervorragend zum Anfärben von wäßrigen Anstrichfarben und für den Einsatz in der Papiermassefärbung.

4.1.2.

Eine Pigmentdispersion mit ähnlich guten Eigenschaften wurde erhalten, indem die 171 Tl. des Tensids nach-Herstellungsbeispiel 3.1. durch 171 Tl. einer 42%igen wäßrigen Lösung des Tensids nach Herstellungsbeispiel 3.5.1. ersetzt wurden.

4.2.

Setzte man in Anwendungsbeispiel 4.1.1 anstelle der 171 Tl. der wäßrigen Lösung des Tensids nach Herstellungsbeispiel 3.1. 195 Tl. einer 37%igen wäßrigen Lösung des Tensids nach Herstellungsbeispiel 3.5.3 ein und reduzierte den den Wasseranteil um 24 Tl., so erhielt man eine Pigmentdispersion mit vergleichbar guten anwendungstechnischen Eigenschaften.

4.3.

4.3.1

400 Tl. Pigment Yellow 16 (Colour Index Number 20040) wurden mit 121 Tl. einer 43%igen wäßrigen Lösung des Tensids nach Herstellungsbeispiel 3.5.4., 200 Tl. Ethylenglykol und 110 Tl. Wasser in einer Rührwerkskugelmühle mit 1 mm Siliquarzit-Glasperlen bis zur erforderlichen Feinteilung gemahlen. Anschliessend wurden dem Mahlgut noch 169 Tl. Wasser zugesetzt und die dünnflüssige Pigmentdispersion über ein Sieb von den Mahlkörpern getrennt. Die 40%ige Pigmentdispersion ließ sich in jedem Verhältnis mit Wasser weiterverdßnnen und eignet sich besonders zum Anfärben wasserhaltiger Bindemittelsysteme.

4.3.2.

Pigmentdispersionen mit vergleichbar guten Eigenschaften wurden erhalten, indem die 121 Tl. des Tensids nach Herstellungsbeispiel 3.5.4. durch 121 Tl. einer 43%igen wäßrigen Lösung des Tensids nach Herstellungsbespiel 3.5.8. ersetzt wurden.

4.4.

450 Tl. Pigment Red 9 (Colour-Index Number 12460) wurden mit 121 Tl. einer 39%igen wäßrigen Lösung des Tensids nach Herstellungsbeispiel 3.5.1., 10 Tl. eines handelsüblichen Gemisches von Natrium-naphtalinsulfonat-Formaldehyd-Kondensationsprodukten

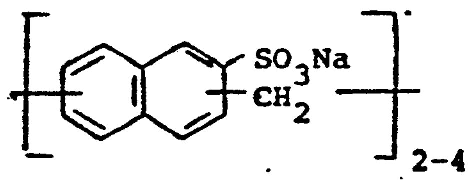

200 Tl. Ethylenglykol und 138 Tl. Wasser in einer Rührwerkskugelmühle mit 1 mm-Siliquarzit-Glasperlen gemahlen und anschließend mit 80 Tl. Wasser verdünnt. Diese dünnflüssige Pigmentdispersion eignet sich hervorragend zum Anfärben wäßriger Flexo- und Tiefdruckfarben und zum Pigmentieren von wäßrigen Anstrichfarben auf der Basis von Kunststoffdispersionen.

4.5.

500 Tl. Pigmentorange 5 (Colour Index Number 12075) wurden mit 153 Tl. einer 39 %igen wäßrigen Lösung des Tensids nach Herstellungsbeispiel 3.5.1., 10 Tl. eines Gemisches von Natrium-dimethylnaphthalinsulfonat-Formaldehyd-Kondensationsprodukten

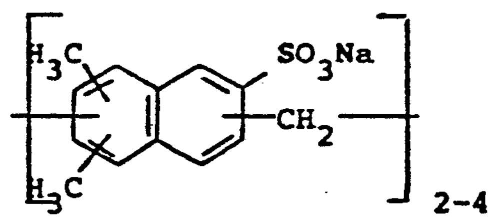

und 200 Tl. Ethylenglykol in einem Doppelmuldenkneter eine Stunde zäh geknetet. Nach erfolgter Dispergierung wurde durch Zugabe von 137 Tl. Wasser auf einen Pigmentgehalt von 50 % eingestellt. Die gut fließfähige und lagerstabile Pigmentdispersion eignet sich besonders zum Anfärben von wäßrigen Flexo- und Tiefdruckfarben und für den Einsatz in der Papiermassefärbung.

4.6.

500 Tl. Pigment Blue 15 (Colour Index No. 74160), 179 Tl. einer 39%igen wäßrigen Lösung des Tensids nach Herstellungsbeispiel 3.5.1., 20 Tl. des in Beispiel 4.4. verwendeten Na-naphthalinsulfonat-Formaldehyd-Kondensationsproduktes, 150 Tl. Ethylenglykol und 115 Tl. Wasser wurden in einer Rührwerkskugelmühle mit 1 mm Siliquarzit-Glasperlen gemahlen und anschließend durch Zugabe von 40 Tl. Wasser verdünnt. Die auf diese Weise erhaltene sehr gute fließfähige Pigmentdispersion eignet sich hervorragend für den Einsatz in wäßrigen Flexo- und Tiefdruckfarben.

**5. Prüfbeispiele**

Für die Prüfung der Dispergiereigenschaften der erfindungsgemäßen Substanzen wurden nachstehende Prüfverfahren benutzt:

Für vergleichende Mahlversuche wurden entsprechend der DE-OS 2 132 403 ca. 4 g Farbstoff C.I. Disperse Red 65 (C.I. Nr. 11 228) mit der zu prüfenden Verbindung, Wasser und 50 g Sili-Quarzitperlen von 1 mm Ø mit einem 2-Scheibenrührer ähnlich den üblichen Rührern in Rührwerksmühlen in einem kleinen Zylinder mit einem Laborrührmotor unter Kühlung gemahlen. Der Fortschritt der Feinverteilung wurde in regelmäßigen Abständen durch Auslauf-Filterproben und mikroskopische Untersuchung verfolgt und die Güte der Dispersion nach einer 5-Punkte-Skala beurteilt (1 = sehr schlecht, 5 = sehr gut). Die Lagerstabilität konnte man nach Verdünnen der Proben auf die gewünschte Farbstoffkonzentration, Lagern der Proben bei 50° C im Trockenschrank und Wiederholung der Auslaufproben nach z.B. 1, 3 und 6 Wochen Lagerung beurteilen.

Als Maß für das Färbeverhalten bei 106° C wurde ein Gemisch Polyester/Wolle und bei 130° C Polyester nach bekannten Verfahren gefärbt. Das Ergebnis wird in der nachfolgenden Tabelle 1 durch die Ziffern 1 bis 5 festgelegt.

Es bedeuten:

1 kein Färbeverhalten
2 schwach
3 brauchbar
4 gut
5 sehr gut

Im Vergleich zu den Dispergiereigenschaften der Tabelle 1 werden in der Tabelle 2 die oberflächenaktiven Eigenschaften nach folgenden DIN-Normen angegeben: Netzkraft: DIN 53 901, Schaumvermögen: DIN 53 902, Oberflächenspannung: DIN 53 914, Farbjodzahl: DIN 6162.

Die Beurteilung des Schaumvermögens wurde nach der Einteilung

0 nicht schäumen
1 schwach
2 schwach-mittel
3 mittel
4 stark

vorgenommen.

Tabelle 1

| Verbindung | Mahl-zeit [h] | Dispersions-güte | Lagerstabilität nach 6 Wochen | Polyester/Woll-Färbung bei 106°C | Polyester-Färbung bei 130°C |
|---|---|---|---|---|---|
| 3.1 | 4 | 5 | 4-5 | 5 | 5 |
| 3.2 | 4 | 5 | 5 | 4-5 | 5 |
| 3.3 | 4,5 | 5 | 4-5 | 5 | 5 |
| 3.4 | 4 | 5 | 5 | 4-5 | 5 |
| 3.5.1. | 5 | 5 | 4-5 | 5 | 5 |
| 3.5.2. | 5 | 4 | 4-5 | 5 | 5 |
| 3.5.3. | 6 | 4-5 | 4-5 | 4-5 | 5 |
| 3.5.4. | 5 | 4-5 | 4-5 | 5 | 5 |
| 3.5.5. | 4 | 5 | 4-5 | 5 | 5 |
| 3.5.6. | 4 | 5 | 4-5 | 5 | 5 |
| 3.5.7. | 4 | 5 | 4-5 | 5 | 5 |
| 3.5.8. | 4 | 5 | 5 | 4-5 | 5 |
| 3.6. | 4 | 5 | 5 | 5 | 5 |
| 3.7. | 5 | 4-5 | 4-5 | 4-5 | 5 |
| 3.8. | 4 | 4 | 4 | 4-5 | 5 |

Tabelle 2:

| Verbindung | Netzkraft (sec.) bei 70°C | Schaumvermögen C = 2 g/l | Oberflächenspannung [$10^{-3}$ N/m]; C = 2 g/l | Jodfarbzahl C = 2 g/l |
|---|---|---|---|---|
| 3.1 | - | 0 | 50,3 | 1 |
| 3.2. | - | 1 | 50,5 | 5 |
| 3.3. | 142 | 0-1 | 47,5 | 1,5 |
| 3.4. | 71 | 1 | 41,0 | 1 |
| 3.5.1. | 235 | 0 | 43,1 | 1 |
| 3.5.2. | 160 | 0 | 56,4 | 1 |
| 3.5.3. | 140 | 0 | 48,1 | 1 |
| 3.5.4. | 125 | 0-1 | 49,8 | 1 |
| 3.5.5. | 145 | 0-1 | 47,2 | 1 |
| 3.5.6. | 136 | 0 | 45,3 | 1 |
| 3.5.7. | 122 | 0 | 42,0 | 1 |
| 3.5.8. | 300 | 0 | 47,5 | 1 |
| 3.6. | 135 | 0-1 | 45,3 | 1,5 |
| 3.7. | 145 | 0-1 | 43,3 | 1 |
| 3.8. | 225 | 0 | 36,6 | 1 |

**Patentansprüche**

1. Verbindungen der allgemeinen Formel I

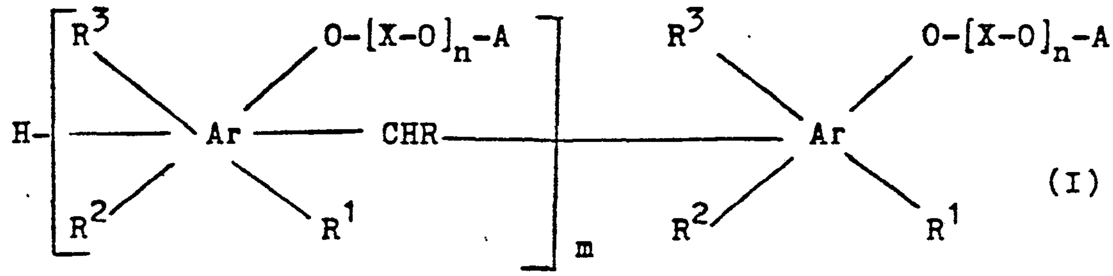

(I)

in welcher Ar einen aromatischen Rest, X eine Ethylen- und/oder Propylengruppe und A mindestens teilweise einen Acylrest bedeutet, dadurch gekennzeichnet, daß
Ar Benzol oder Naphthalin,
X die Gruppen $-CH_2-CH_2-$ und/oder $-CH_2-CH(CH_3)-$,
ein Teil der Reste A Benzoyl und/oder Naphthoyl und die übrigen Reste A
-CO-CH = CH-COOM und/oder
$-CO-CH_2-CH(SO_3M)-COOM$, wobei M für ein Kation steht, $R^1$, $R^2$ und $R^3$ Wasserstoff oder Alkyl mit 1 bis 14 C-Atomen
R Wasserstoff und/oder Alkyl mit 1 bis 9 C-Atomen,
n eine Zahl von 1 bis 150 und
m eine Zahl von 2 bis 12 bedeuten.

2. Verbindungen nach Anspruch 1, in welchen
$R^1$ Wasserstoff,
$R^2$ und $R^3$ Wasserstoff oder Alkyl mit 1 bis 12 C-Atomen,
R Wasserstoff und/oder Alkyl mit 1 bis 4 C-Atomen,
n eine Zahl von 2 bis 20,
m eine Zahl von 4 bis 10 und
M Wasserstoff, ein Alkalimetall, ein Äquivalent Erdalkalimetall und/oder eine Ammoniumgruppe, die durch niederes Alkyl und/oder niederes Hydroxyalkyl substituiert sein kann, sowie eine aus Ammoniak oder niederen Alkylaminen durch Anlagerung von bis zu 150 Ethylenoxid- und/oder Propylenoxideinheiten erhaltene Ammoniumgruppe bedeuten.

3. Verbindungen nach Anspruch 2, in welchen
R Wasserstoff,
M Wasserstoff, Natrium und/oder eine Ammoniumgruppe, die durch niederes Alkyl und/oder niederes Hydroxyalkyl substituiert sein kann, sowie eine aus Ammoniak oder niederen Alkylaminen durch Anlagerung von 5 bis 30 Ethylenoxid und/oder Propylenoxideinheiten erhaltene Anunoniumgruppe bedeuten.

4. Verbindungen nach Anspruch 3, in welchen
Ar Benzol,
$R^2$ und $R^3$ Wasserstoff oder Alkyl mit 1 bis 9 C-Atomen,
n eine Zahl von 8 bis 20 und
m eine Zahl von 4 bis 8 bedeuten.

5. Verbindungen nach Anspiuch 3, in welchen
Ar Naphthalin,
R2 und R3 Wasserstoff oder Alkyl mit 1 bis 9 C-Atomen,
n eine Zahl von 8 bis 20 und
m eine Zahl von 4 bis 8 bedeuten.

6. Verfahren zur Herstellung der Verbindungen gemäß Anpruch 1 bis 5, dadurch gekennzeichnet, daß man Verbindungen der Formel 1, in welcher A Wasserstoff ist, mit 1 bis m Mol einer den Benzoyl- und/oder Naphthoylrest einführenden 0-acylierenden Verbindung sowie mit 1 bis m Mol Maleinsäureanhydrid und gegebenenfalls 1 bis m Mol Sulfit bzw. Hydrogensulfit oder 0,5 bis 0,5 m Mol Disulfit behandelt und gegebenenfalls freie Säuregruppen mit einer den Rest M einführenden Base neutralisiert.

7. Verfahren nach Anspruch 6, dadurch gekennzeichnet, daß man Verbindungen der Formel I, in welcher A Wasserstoff ist, mit Benzoesäure oder Naphthoesäure oder deren Anhydriden in Gegenwart saurer Katalysatoren umsetzt.

8. Verfahren nach Anspruch 6, dadurch gekennzeichnet, daß man Verbindungen der Formel I, in welcher A Wasserstoff ist, mit niederen Alkylestern oder Säurechloriden der Benzoesäure oder Naphthoesäure in Gegenwart basischer Katalysatoren umsetzt.

9. Verfahren nach Anspruch 6 bis 8, dadurch gekennzeichnet, daß man als Sulfit bzw. Hydrogensulfit oder Disulfit jeweils das Natriumsalz einsetzt.

10. Verwendung der Verbindungen nach Anspruch 1 als grenzflächenaktive Mittel.
11. Verwendung der Verbindungen nach Anspruch 1 als Kupplungshilfsmittel.
12. Verwendung der Verbindungen nach Anspruch 1 als Dispergier - und Verteilungsmittel.
13. Verwendung der Verbindungen nach Anspruch 1 als Netz-, Emulgier-, Egalisier- und Färbereihilfsmittel.

**Claims:**

1. Compounds of the general formula I

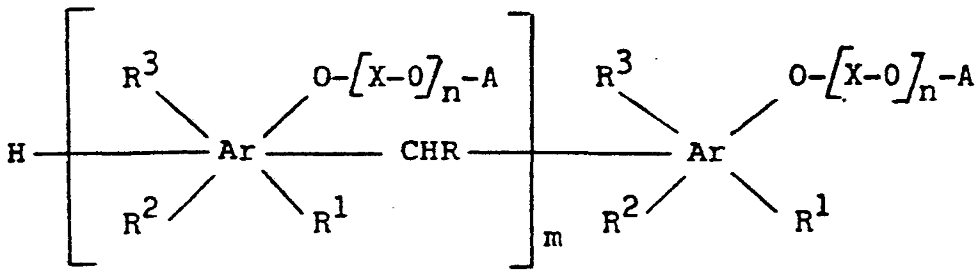

(I)

in which Ar denotes an aromatic radical, X denotes ethylene and/or propylene, and at least some of the radicals A denote acyl radicals, characterized in that
Ar denotes benzene or naphthalene,
the X's denote groups of the formulae
$-CH_2-CH_2-$ and/or $-CH_2-CH(CH_3)-$,
a number of the radicals A denote benzoyl and/or naphthoyl, and the rest of the radicals A denote $-CO-CH=CH-COOM$ and/or $-CO-CH_2-CH(SO_3M)-COOM$, in which M represents a cation,
$R^1$, $R^2$ and $R^3$ denote hydrogen or alkyl having 1 to 14 carbon atoms
the R's denote hydrogen atoms and/or alkyl groups having 1 to 9 carbon atoms,
n denotes a number of from 1 to 150, and
m denotes a number of from 2 to 12.

2. Compounds as claimed in claim 1, in which $R^1$ denotes hydrogen, $R^2$ and $R^3$ denote hydrogen or alkyl having 1 to 12 C atoms, R denotes hydrogen and/or alkyl having 1 to 4 C atoms, n denotes a number from 2 to 20, m denotes a number from 4 to 10 and M denotes hydrogen, an alkali metal, one equivalent of an alkaline earth metal and/or an ammonium group which can be substituted by lower alkyl and/or lower hydroxyalkyl or M denotes an ammonium group obtained from ammonia or lower alkylamines by addition of up to 150 ethylene oxide and/or propylene oxide units.

3. Compounds as claimed in claim 2, in which R denotes hydrogen and M denotes hydrogen, sodium and/or an ammonium group which can be substituted by lower alkyl and/or lower hydroxyalkyl or M denotes an ammonium group obtained from ammonia or lower alkylamine by addition of 5 to 30 ethylene oxide and/or propylene oxide units.

4. Compounds as claimed in claim 3, in which Ar denotes benzene, $R^2$ and $R^3$ denote hydrogen or alkyl having 1 to 9 carbon atoms, n denotes a number from 8 to 20 and m denotes a number from 4 to 8.

5. Compounds as claimed in claim 3, in which Ar denotes naphthalene, $R^2$ and $R^3$ denote hydrogen or alkyl having 1 to 9 C atoms, n denotes a number from 8 to 20 and m denotes a number from 4 to 8.

6. Process for preparing compounds as claimed in claims 1 to 5, characterized by treating a compound of the formula I in which A is hydrogen with 1 to m moles of an O-acylating compound which introduces the benzoyl and/or naphthoyl radicals and with 1 to m moles of maleic anhydride and, if appropriate, 1 to m moles of sulfite or hydrogen sulfite or 0.5 to 0.5 m moles of disulfite and neutralizing any free acid group present with a base which introducesthe radical M.

7. The process as claimed in claim 6, characterized in that a compound of the formula I in which A is hydrogen is reacted with benzoic acid, naphthoic acid or the corresponding acid chlorides or anhydrides in the presence of acid catalysts.

8. The process as claimed in claim 6, characterized in that a compound of the formula I in which A is hydrogen is reacted with lower alkyl esters of benzoic acid or naphthoic acid in the presence of basic catalysts.

9. The process as claimed in claims 6 to 8, wherein as sulfite or hydrogen sulfite or disulfite the respective sodium salt is used.

10. The use of the compounds as claimed in claim 1, as surface-active agents.

11. The use of the compounds as claimed in claim 1, as coupling auxiliaries.

12. The use of the compounds as claimed in claim 1, as dispersing and distributing agents.

13. The use of the compounds as claimed in claim 1, as wetting, emulsifying, leveling and dyeing auxiliaries.

**Revendications**

1. Composés de formule generale I

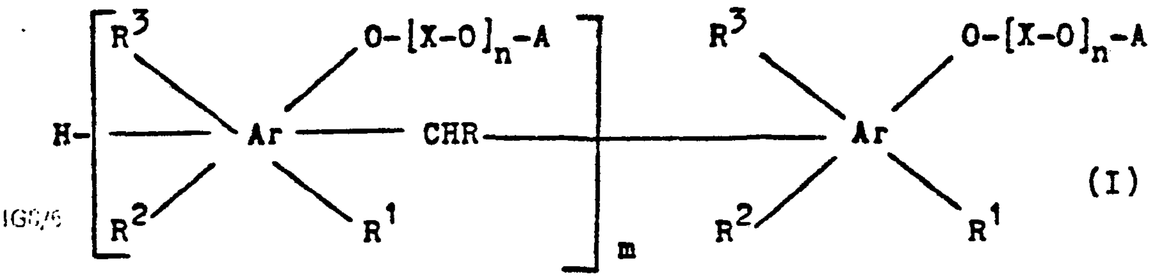

(I)

dans laquelle Ar est un radical aromatique, X un groupe éthylène et/ou propylène, et A est, au moins partiellement, un radical acyle, caractérisés en ce que Ar est le benzène ou le naphtalène; X désigne les groupes $-CH_2-CH_2-$ et/ou $-CH_2-CH(CH_3)-$; une partie des radicaux A est le radical benzoyle et/ou naphtoyle, les autres radicaux A étant $-CO-CH=CH-COOH$ et/ou $-CO-CH_2-CH(SO_3M)-COOM$, où M est un cation; $R^1$, $R^2$ et $R^3$ sont chacun l'hydrogène ou un radical alkyle ayant 1 à 14 atomes de carbone; R est l'hydrogène et/ou un radical alkyle ayant 1 à 9 atomes de carbone; n est un nombre de 1 à 150 et m est un nombre de 2 à 12.

2. Composés selon la revendication 1, dans lesquels $R^1$ est l'hydrogène; $R^2$ et $R^3$ sont chacun l'hydrogène ou un radical alkyle ayant 1 à 12 atomes de carbone; R est l'hydrogène ou un radical alkyle ayant 1 à 4 atomes de carbone; n est un nombre de 2 à 20; m est un nombre de 4 à 10; et M est l'hydrogène, un métal alcalin, un équivalent métal alcalinoterreux et/ou un groupe ammonium, qui peut être substitué par un radical alkyle inférieur et/ou hydroxyalkyle inférieur, ainsi qu'un groupe ammonium, obtenu à partir de l'ammoniac ou d'alkylamines inférieures par fixation d'un nombre inférieur ou égal à 150 de motifs oxyde d'éthylène et/ou oxyde de propylène.

3. Composés selon la revendication 2, dans lequel R est l'hydrogène; M est l'hydrogène, le sodium et/ou un groupe ammonium qui peut être substitué par un radical alkyle inférieur et/ou hydroxyalkyle inférieur, ainsi qu'un groupe ammonium obtenu à partir de l'ammoniac ou d'alkylamines inférieures par fixation de 5 à 30 motifs oxyde d'éthylène et/ou oxyde de propylène.

4. Composés selon la revendication 3, dans lesquels Ar est le benzène; $R^2$ et $R^3$ sont chacun l'hydrogène ou un radical alkyle ayant 1 à 9 atomes de carbone; n est un nombre de 8 à 20 et m est un nombre de 4 à 8.

5. Composés selon la revendication 3, dans lesquels Ar est le naphtalène; $R^2$ et $R^3$ sont chacun l'hydrogène ou un radical alkyle ayant 1 à 9 atomes de carbone; n est un nombre de 8 à 20 et m est un nombre de 4 à 8.

6. Procédé pour la préparation de composés selon les revendications 1 à 5, caractérisé en ce qu'on traite des composés de formule I dans laquelle A est l'hydrogène avec 1 à m moles d'un composé 0-acylant introduisant le radical benzoyle et/ou naphtoyle, et avec 1 à m moles d'anhydride maléique et éventuellement 1 à m moles d'un sulfite ou hydrogénosulfite ou 0,5 à 0,5 m moles de bisulfite, et qu'on neutralise les groupes acides éeventuellement libres à l'aide d'une base introduisant le radical m.

7. Procédé selon la revendication 6, caractérisé en ce qu'on fait réagir des composés de formule I dans laquelle A est l'hydrogène sur de l'acide benzoïque ou de l'acide naphtoïque ou leurs anhydrides, en présence de catalyseurs acides.

8. Procédé selon la revendication 6, caractérisé en ce qu'on fait réagir des composés de formule I dans laquelle A est l'hydrogène sur des esters alkyliques inférieurs ou des chlorures d'acide de l'acide benzoïque ou de l'acide naphtoïque, en présence de catalyseurs basiques.

9. Procédé selon les revendications 6 à 8, caractérisé en ce qu'on utilise comme sulfite ou hydrogénosulfite, ou bisulfite, dans chaque cas le sel de sodium.

10. Utilisation des composés selon la revendication 1 en tant que substances tensioactives.

11. Utilisation des composés selon la revendication 1 en tant qu'auxiliaires de copulation.

12. Utilisation des composés selon la revendication 1 en tant que dispersants et agents de répartition.

13. Utilisation des composés selon la revendication 1 en tant que mouillants, émulsionnants, agents d'unisson et auxiliaires de teinture.